# EUROPÄISCHE PATENTSCHRIFT

(11) **EP 4 313 814 B1**
(45) Veröffentlichungstag und Bekanntmachung des Hinweises auf die Patenterteilung: **09.07.2025**
(21) Anmeldenummer: 22711869.2
(22) Anmeldetag: 09.03.2022
(51) Int. Cl.: B65G 65/23

(54) **BEHÄLTERHEBE- UND ENTLEERVORRICHTUNG**
CONTAINER LIFTING AND EMPTYING DEVICE
DISPOSITIF DE LEVAGE ET DE VIDAGE DE RÉCIPIENT

(30) Priorität: 23.03.2021 DE 102021107127
(43) Veröffentlichungstag der Anmeldung: 07.02.2024
(73) Patentinhaber: Schaeffler Technologies AG & Co. KG, 91074 Herzogenaurach (DE)
(72) Erfinder: HAUSECKER, Jörg, 91074 Herzogenaurach (DE); KURZ, Thomas, 91074 Herzogenaurach (DE)
(86) Internationale Anmeldenummer: PCT/DE2022/100190
(87) Internationale Veröffentlichungsnummer: WO 2022/199750

(56) Entgegenhaltungen:
- FR-A1- 3 097 539
- NL-A- 7 701 966
- NL-A- 9 101 271

## Beschreibung

Die Erfindung betrifft eine Behälterhebe- und Entleervorrichtung nach dem Oberbegriff des Anspruchs 1.

Ein gattungsgemäßes Hebe- und Entleergerät für Behälter ist beispielsweise aus der DE 88 10 211 U1 bekannt. Das bekannte Behälterhebe- und Entleergerät umfasst einen auf Rädern fahrbaren Rahmen, einen am Rahmen in vertikaler Richtung verschiebbaren Schlitten, sowie einen Motor, der die vertikale Verschiebung des Schlittens bewirkt. Darüber hinaus ist im Fall des Hebe- und Entleergerätes nach der DE 88 10 211 U1 ein Schwenkrahmen vorgesehen, an welchem ein Behälter befestigbar ist. Ferner umfasst das bekannte Hebe- und Entleergerät eine Zahnstange, die in unterschiedlicher Höhe an dem Rahmen befestigbar ist. Am Schlitten ist ein Zahnrad gelagert, welches mit der Zahnstange kämmt. Die Drehbewegung des Zahnrades wird in eine Schwenkbewegung des Schwenkrahmens umgesetzt.

Verschiedene Kistenhubgeräte sind zum Beispiel in den Dokumenten DE 20 2008 016 092 U1 und DE 10 2013 002 752 A1 beschrieben. Ein Kistenstapelsystem ist in der DE 10 2016 109 017 A1 offenbart.

Die DE 43 28 378 C2 beschreibt eine Hebe- und Entleervorrichtung für einen Abfall-Sammelbehälter. An der Hebe- und Entleervorrichtung befinden sich zwei Greifvorrichtungen zum Einhängen von Aufhängebügeln eines Sammelbehälters. Die beiden Greifvorrichtungen sind wahlweise zusammen oder getrennt voneinander betätigbar.

Die FR 3 097 539 A1 beschreibt eine Vorrichtung gemäß dem Oberbegriff des Anspruchs 1 und eine Transportgondel zum Entladen von Kisten mit einem Gestell in vertikaler Traube und zwei Armen, die sich parallel zueinander, auf gleicher Höhe, auf derselben Seite und senkrecht zum vertikalen Rahmen erstrecken: die Arme sind relativ zueinander zwischen einer beabstandeten und einer eingezogenen Position beweglich und weisen jeweils mindestens ein Greifmittel auf.

Der Erfindung liegt die Aufgabe zu Grunde, eine gegenüber dem Stand der Technik weiterentwickelte, flexibel einsetzbare, besonders benutzerfreundliche Behälterhebe- und Entleervorrichtung anzugeben.

Diese Aufgabe wird erfindungsgemäß gelöst durch eine zum Heben und Entleeren von Behältern ausgebildete Vorrichtung mit den Merkmalen des Anspruchs 1. Die Behälterhebe- und Entleervorrichtung umfasst einen fahrbaren Rahmen, einen am Rahmen in vertikaler Richtung verschiebbaren Schlitten, sowie eine am Schlitten gelagerte Behälterschwenkvorrichtung, welche dazu ausgebildet ist, einen Behälter, der sich auf einem Behälterstapel befindet, von oben mit Hilfe mehrerer Klinken zu greifen. Die Behälterschwenkvorrichtung umfasst eine Behälterdeckelverriegelung, durch welche mechanisch zwangsgesteuert, nämlich mittels einer Nocken- oder Kulissensteuerung, in einer Lagerungsposition sowie in einer umgekippten Behälterposition ein Entriegelungszustand und im Übrigen, das heißt beim Schwenken, ein Verriegelungszustand eingestellt ist.

Ein Vorteil gegenüber konventionellen Lösungen, bei denen ein Behälter von unten mit einer Gabel angehoben wird, liegt darin, dass Behälter nacheinander auf einfache Weise von oben von einem Stapel abgenommen und im Laufe des weiteren Handlings geschwenkt werden können. Bei der Schwenkbewegung kann es sich hierbei um ein vollständiges Kippen, das heißt eine 180°-Schwenkbewegung, handeln. Ebenso sind Varianten möglich, in denen ein Schwenken um einen geringeren Winkel, beispielsweise lediglich um 135°, vorgesehen ist.

Unabhängig vom maximalen Schwenkwinkel sind auf gegenüber liegenden Behälterseiten beispielsweise jeweils mindestens zwei Klinken angeordnet, welche zum selbsttätigen Einrasten in eine Kontur eines Behälters beim Absenken der Behälterschwenkvorrichtung ausgebildet sind. Je nach Gestaltung der handzuhabenden Behälter kann im Extremfall auch eine einzige Klinke pro Behälterseite, an welcher der Behälter zu greifen ist, ausrechend sein. Ebenso sind Gestaltungen denkbar, in welchen ein Behälter mit Hilfe von mehr als zwei Klinken pro Behälterseite gegriffen wird.

Gemäß einer vorteilhaften Weiterbildung sind Klinken für verschiedene Behältertypen vorhanden, wobei sämtliche Klinken durch Federkraft vorgespannt und mittels Rastbolzen deaktivierbar sind. Statt Rastbolzen kommen auch sonstige Mechanismen, die die nicht benötigten Klinken außer Funktion setzen, in Betracht. In jedem Fall ist die Behälterhebe- und Entleervorrichtung damit auf einfachste Weise und in kurzer Zeit auf unterschiedliche Behältertypen umrüstbar.

Unabhängig von der Anzahl und Anordnung der Klinken können die Klinken im eingerasteten Zustand zur Zulassung eines Verschiebens des eingeklinkten Behälters in einer zum Behälterboden parallelen Ebene ausgebildet sind. Somit kann ein Behälter auf einfachste Weise, ohne Betätigung eines Entriegelungsmechanismus, manuell aus der Behälterhebe- und Entleervorrichtung entnommen werden.

Die mechanisch gesteuerte Behälterdeckelverriegelung sorgt dafür, dass der Deckel des Behälters während des Schwenkens verriegelt bleibt und die im Behälter befindlichen Teile während und nach dem Schwenkvorgang schonend, das heißt insbesondere schlagstellenarm, auf eine nachgeschaltete Fördervorrichtung, insbesondere in Form eines Förderbandes oder eines Vibrationsförderers, abgelegt werden können, womit Oberflächenbeschädigungen vermieden oder minimiert werden.

Der Antrieb des vertikal verfahrbaren Schlittens erfolgt beispielsweise mit einem Spindeltrieb. Bei dem Schlitten kann es sich zum Beispiel um ein Gehäuse eines Getriebes der Behälterschwenkvorrichtung handeln. Eine nicht schwenkbare Komponente der Behälterschwenkvorrichtung kann auf einem Abtriebselement des Spindeltriebs, das heißt einem mit der Spindelmutter verbundenen Element, lose aufliegen. Dies gilt sowohl beim Anheben als auch beim Absenken des Behälters. Beim Absenkvorgang kann es somit, falls die Last, das heißt die Behälterschwenkvorrichtung samt Behälter, gestoppt wird, dazu kommen, dass das Abtriebselement des Spindeltriebs die Absenkbewegung fortsetzt und sich somit vom Schlitten nach unten entfernt. Dieser Vorgang wird auch als Überholen des Schlittens durch das Abtriebselement des Spindeltriebs bezeichnet. Während des Schwenkens des Behälters soll ein solches Überholen mechanisch ausgeschlossen sein.

Zu diesem Zweck kann an der Behälterschwenkvorrichtung ein Verriegelungselement verschiebbar gelagert sein, welches in einer ersten Einstellung ein Überholen des Schlittens durch das Abtriebselement des Spindeltriebs freigibt und zugleich Schwenkbewegungen der Behälterschwenkvorrichtung blockiert, wogegen in einer zweiten Einstellung des Verriegelungselementes ein Überholen des Schlittens durch das Abtriebselement des Spindeltriebs blockiert ist und zugleich Schwenkbewegungen der Behälterschwenkvorrichtung freigegeben sind. Hierbei kann eine Umschaltung zwischen den beiden Einstellungen des Verriegelungselementes mechanisch zwangsgesteuert in Abhängigkeit von der Höhenlage des Schlittens erfolgen.

Zum mechanisch ausgelösten Stoppen des Schlittens in Fällen, in denen das die Behälterschwenkvorrichtung ansonsten tragende Abtriebselement des Spindeltriebs den Schlitten überholt, das heißt sich nach unten vom Schlitten wegbewegt, kann eine Bremse vorgesehen sein, die zum Beispiel einen Exzenter als bremsendes Element umfasst. Hierbei kann der Exzenter mit einem Bremsbelag versehen sein oder als Ganzes wie ein Bremsbelag wirken.

Alternativ zu einem Spindeltrieb als elektromechanischem Linearantrieb kann ein Zugmittel in Form eines Zahnriemens oder einer Kette vorgesehen sein, welches, typischerweise ebenfalls elektrisch angetrieben, die Behälterschwenkvorrichtung anhebt. Unabhängig davon, auf welche Weise die Behälterschwenkvorrichtung angehoben und abgesenkt wird, kann das Schwenken mittels eines Getriebes mechanisch mit der Hubbewegung synchronisiert sein. Elemente dieses Getriebes können hierbei in den Mechanismus, welcher das bereits beschriebene Verriegelungselement verschiebt, integriert sein. Dies gilt insbesondere für Ausführungsformen, in denen das zum Schwenken des Behälters ausgebildete Getriebe eine Zahnstange umfasst. In diesem Fall kann der Mechanismus, welcher das Verriegelungselement verschiebt, eine Steuerrolle umfassen, die an der Zahnstange anläuft. Zum Anheben und Absenken des Behälters kann, wie auch in anderen Ausführungsformen, ein Spindeltrieb vorgesehen sein.

Der fahrbare Rahmen der Behälterhebe- und Entleervorrichtung weist in der Draufsicht beispielsweise eine U-Form auf, die es ermöglicht, einen einzelnen Behälterstapel oder auch zwei nebeneinander befindliche Behälterstapel zu umgreifen. Die anzuhebenden und zu schwenkenden Behälter befinden sich damit innerhalb eines Rechtecks, welches durch den fahrbaren Rahmen beschrieben ist. Im Fall zweier nebeneinander angeordneter Behälterstapel ist nach der Abarbeitung des ersten Stapels die relative Positionierung von fahrbarem Rahmen und Behältern zu ändern, um das Handling des zweiten Behälterstapels zu ermöglichen.

Generell kann die Behälterhebe- und Entleervorrichtung entweder auf Rollen fahrbar oder zur längerfristigen Verwendung an ein und derselben Stelle ausgeführt sein. Die gestapelten Behälter können sich in Form eines Einzelstapels auf einer Palette befinden, in welche bei Bedarf eine Tropfwanne integriert sein kann. Entsprechendes gilt für einen Bodenroller, welcher einen oder mehrere Behälterstapel trägt. Die volle Funktionsfähigkeit der Behälterhebe- und Entleervorrichtung ist ohne pneumatische oder hydraulische Antriebe gegeben.

Die Geschwindigkeit, mit welcher die Behälter angehoben werden, kann einstellbar sein. Innerhalb des Schwenkbereichs kann eine automatische Reduktion der vertikalen Verfahrgeschwindigkeit vorgesehen sein. Zum Stoppen der durch die Behälterhebe- und Entleervorrichtung ausgeführten Bewegungen können Endlagenschalter vorhanden sein. Die Behälterhebe- und Entleervorrichtung ist in typischen Ausgestaltungen für Behältergewichte bis 50 kg ausgelegt. Skalierungen sind unter Beibehaltung der grundsätzlichen konstruktiven Merkmale möglich.

Nachfolgend werden mehrere Ausführungsbeispiel der Erfindung anhand einer Zeichnung näher erläutert. Hierin zeigen:
- Fig. 1: ausschnittsweise eine Behälter- und Entleervorrichtung in perspektivischer Ansicht,
- Fig.2: in schematischer Darstellung einen mit der Vorrichtung nach Figur 1 durchführbaren Anhebe- und Schwenkvorgang,
- Fig. 3: in einer Darstellung analog Figur 2 einen Schwenk- und Absenkvorgang,
- Fig. 4: eine rückseitige Ansicht der Vorrichtung nach Figur 1,
- Fig. 5: ein Detail der Behälterhebe- und Entleervorrichtung nach Figur 1 einschließlich eines verschiebbaren Verriegelungselementes,
- Fig. 6 und 7: in schematischen Darstellungen verschiedene mögliche Einstellungen des Verriegelungselementes,
- Fig. 8: eine Behälterschwenkvorrichtung der Behälterhebe- und Entleervorrichtung nach Figur 1,
- Fig. 9: eine alternative Bauform einer Behälterschwenkvorrichtung,
- Fig. 10 und 11: verschiedene Zustände einer Schlaffkettenüberwachung der Anordnung nach Figur 9 in schematisierten Darstellungen,
- Fig. 12: ein Detail eines Klinkenmechanismus, welcher in der Vorrichtung nach Figur 1 ebenso wie in der Vorrichtung nach Figur 9 zum Einsatz kommt,
- Fig. 13: eine Bremse der Behälterhebe- und Entleervorrichtung nach Figur 1,
- Fig. 14: eine Deckelverrieglung der Behälterhebe- und Entleervorrichtung nach Figur 1,
- Fig. 15: fahrbare Komponenten der Behälterhebe- und Entleervorrichtung nach Figur 1 sowie eine Behälteranordnung.

Die folgenden Erläuterungen beziehen sich, soweit nicht anders angegeben, auf beide Ausführungsbeispiele. Einander entsprechende oder prinzipiell gleichwirkende Teile sind in allen Figuren mit den gleichen Bezugszeichen gekennzeichnet.

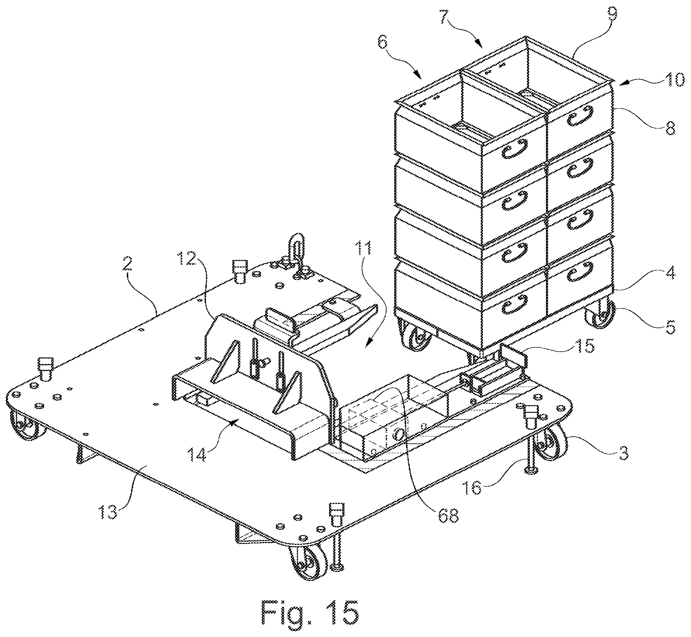

Eine insgesamt mit dem Bezugszeichen 1 gekennzeichnete Behälterhebe- und Entleervorrichtung umfasst einen fahrbaren Rahmen 2, an welchem sich Räder 3 befinden. Der Rahmen 2 beschreibt einen U-Form, welche durch eine Metallplatte 13 gebildet ist, die das Hauptelement des Rahmens 2 darstellt. Eine durch die U-Form des Rahmens 2 gebildete Ausnehmung ist mit 11 bezeichnet und derart bemessen, dass ein mit 4 bezeichneter Roller, auf welchem sich zwei Stapel 6, 7 an Behältern 8 befinden, in der Ausnehmung 11 positionierbar ist. Abweichend von dem in Figur 15 skizzierten Ausführungsbeispiel könnte der Roller 4 auch zur Aufnahme lediglich eines einzigen Behälterstapels 6 ausgebildet sein. Die Räder des Rollers 4 sind mit 5 bezeichnet.

Der Roller 4 mit den Behälterstapeln 6, 7 wird soweit in die Ausnehmung 11 eingeschoben, bis die Behälterstapel 6, 7 durch einen höhenverstellbaren Behälteranschlag 12 gestoppt werden. Unterhalb des Behälteranschlag 12, oberhalb der Metallplatte 13, ist im Ausführungsbeispiel nach Figur 15 ein Tunnel 14 gebildet. Der Tunnel 14 ermöglicht ein teilweises Vorschieben einer Transport- und Lagervorrichtung, in welcher sich Werkstücke befinden, insbesondere eines Bodenrollers, über den Behälteranschlag 12 hinaus. Die Möglichkeit der Höheneinstellung des Behälteranschlag 12 ist insbesondere bei der Verwendung von auf Paletten gestapelten Behältern 8 nützlich. Der Behälteranschlag 12 sorgt dafür, dass der Behälterstapel 6, welcher eine erhebliche Massenträgheit aufweist, beim Stoppen in der Ausnehmung 11 nicht verrutscht, was ansonsten aufgrund der geringen Reibung zwischen Behältern 8 und Palette oder Roller 4 möglich wäre. In Fig. 15 ist ferner ein Fußbetätiger 15 erkennbar, welcher sich auf der Metallplatte 13 befindet und zur Betätigung eines seitlichen Anschlags 68 vorgesehen ist. Der Anschlag 68, mit welchem der Roller 4 samt Behälterstapeln 6, 7 gestoppt werden kann, ist im Ausführungsbeispiel für Massen bis 300 kg ausgelegt. Der gesamte Rahmen 2 ist mit Hilfe von Stützen 16 fest positionierbar.

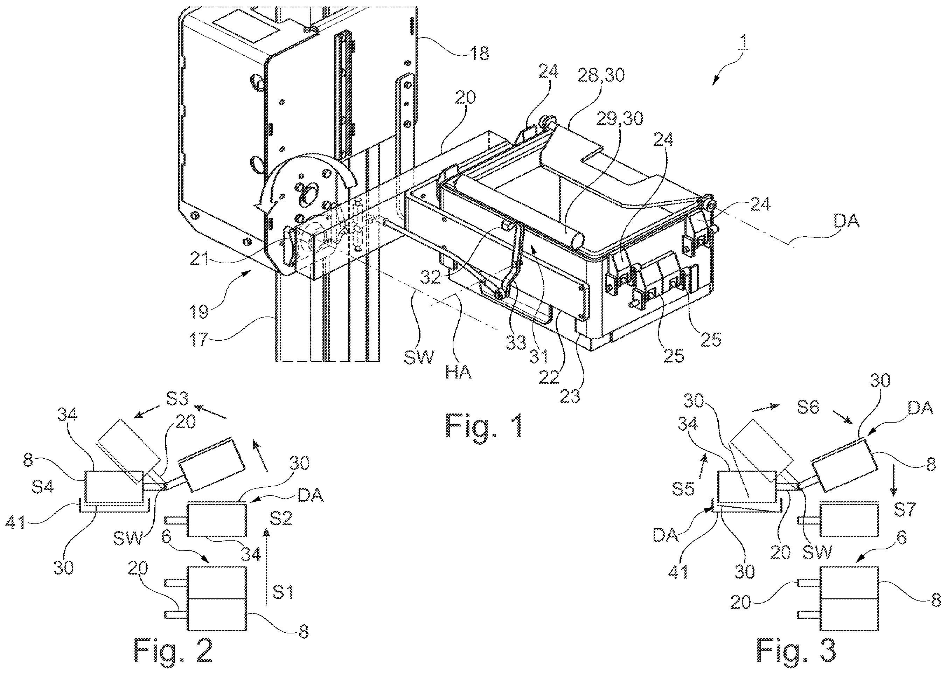

Auf dem fahrbaren Rahmen 2 ist eine vertikal ausgerichtete Führungsbaugruppe 17, die unter anderem in Figur 1 erkennbar ist, befestigt. An der Führungsbaugruppe 17 ist ein Schlitten 18 verfahrbar, an welchem sich eine Behälterschwenkvorrichtung 19 befindet. Die Behälterschwenkvorrichtung 19 umfasst einen Schwenkarm 20, welcher in der Anordnung nach Figur 1 horizontal ausgerichtet ist. Diese Ausrichtung entspricht einem Schritt S1 eines Hebe- und Schwenkvorgangs, welcher in Figur 2 symbolisiert dargestellt ist. Der im Schritt S2 bereits vom Stapel 6 abgehobene, jedoch noch in horizontaler Lage befindliche Behälter 8 wird im Schritt S3 um 180° um eine Schwenkachse SW geschwenkt. Im gemäß Figur 2 letzten, mit S4 bezeichneten Schritt befindet sich der Behälter 8 unmittelbar über einer Fördervorrichtung 41, im vorliegenden Fall einem Förderband, wobei ein mit 30 bezeichneter Deckel des Behälters 8 mit geringem Abstand oberhalb der Fördervorrichtung 41 angeordnet ist. Während der Schwenkbewegung ist der Deckel 30, wie im Folgenden noch näher erläutert wird, auf dem Behälter 8 fixiert.

Im umgekippten Zustand öffnet der Deckel 30, dessen Schwenkachse am Behälter 8 mit DA bezeichnet ist und während des gesamten Schwenkvorgangs stets parallel zur Schwenkachse SW des Schwenkarms 20 angeordnet ist, etwas, bis er auf der Fördervorrichtung 41 aufliegt. Dieser Zustand ist in Figur 3, die das Entladen und Zurückschwenken des Behälters 8 veranschaulicht, mit S5 bezeichnet. Das geringfügige Öffnen des Deckels 30 im komplett umgekippten Zustand erfolgt durch sein eigenes Gewicht sowie durch das Gewicht der im Behälter 8 befindlichen, zu fördernden Werkstücke. Im Laufe des Zurückschwenkens des Behälters 8, in Figur 3 mit S6 bezeichnet, öffnet sich der Deckel 30 zunächst weiter, sodass die Werkstücke schonend auf die Fördervorrichtung 41 rutschen. Das schonende Ablegen der Werkstücke auf die Fördervorrichtung 41 wird unterstützt durch eine Deckelverriegelung 31, welche mittels einer Nockensteuerung 50 betätigt wird, auf die im Folgenden noch näher eingegangen werden wird. Ferner vermeidet ein Lichtvorhang Beschädigungen, welche durch erneutes Auffahren auf die Entleerposition in der Fördervorrichtung 41, das heißt im Dosierband oder Linearförderer, denkbar wären. Allgemein überwacht der Lichtvorhang den Anlagenbereich, damit sichergestellt ist, dass der Betrieb der Behälterhebe- und Entleervorrichtung 1 nicht durch Teile oder Schüttgut gestört wird.

Nach Überschreiten der vertikalen Ausrichtung während des Zurückschwenkens des leeren Behälters 8 ist der Deckel 30 wieder geschlossen, wie im Schritt S7 nach Figur 3 angedeutet. Anschließend ist ein Entnehmen des Behälters 8, ein erneutes Stapeln der Behälter 8 oder ein beliebiger Weitertransport der Behälter 8 möglich.

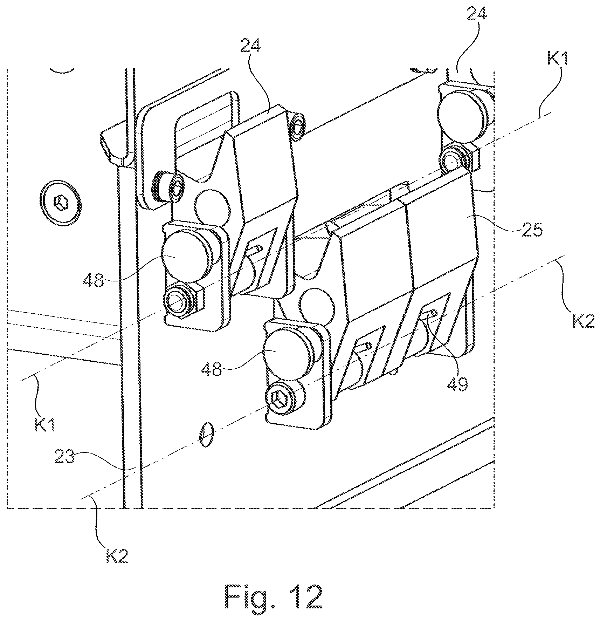

Einzelheiten der Schwenkvorrichtung 19 gehen aus Figur 1 hervor. Ein rotationssymmetrisches Bauteil 21 ist konzentrisch zur Schwenkachse SW angeordnet. Am Schwenkarm 20 ist ein L-förmiges Verbindungselement 22 gehalten, welches einen Halterahmen 23 trägt. Die Abmessungen des Halterahmens 23 sind auf die Größe eines Behälters 8 abgestimmt. An zwei einander gegenüber liegenden Seiten des Halterahmens 23 sind jeweils zwei Klinken 24 und zwei weitere Klinken 25 gelagert. Im Ausführungsbeispiel nach Figur 1 befinden sich die Klinken 24 nahe des oberen Randes des Halterahmens 23 in der Nähe der Ecken des Behälter 8. Jeweils zwei unmittelbar nebeneinander angeordnete Klinken 25 befinden sich etwa in der Mitte einer Schmalseite des Behälters 8, das heißt im Vergleich zu den Klinken 24 in einer zum Behälterboden 34 hin versetzten Anordnung. Die unterschiedliche Anordnung der Klinken 24 einerseits und der Klinken 25 andererseits hat den Zweck, bei Bedarf unterschiedliche Behälter 8 greifen zu können. Konturen des Behälters 8, in welche Klinken 24, 25 greifen können, sind mit 10 bezeichnet. Einzelheit des mit Hilfe der Klinken 24, 25 verwirklichten Mechanismus zum Greifen des Behälter 8 gehen aus Figur 12 hervor. Danach sind nicht benötigte Klinken 24, 25 mit Hilfe von Bolzen 48 sperrbar. Auf jede Klinke 24, 25 wird ein Drehmoment durch eine Feder 49 ausgeübt. Die Achsen, um welche die Klinken 24, 25 kippbar sind, sind mit K1, K2, bezeichnet.

Unabhängig von der im Einzelfall gegebenen Gestaltung der Behälter 8 können diese auf einfache Weise durch die Behälterhebe- und Entleervorrichtung 1 aufgenommen werden, indem der Halterahmen 23 samt Klinken 24, 25 von oben über den Behälter 8 fährt. Zum hierfür erforderlichen Verfahren des Schlittens 18 in vertikaler Richtung ist im Ausführungsbeispiel nach Figur 1 ein Spindeltrieb 26 vorgesehen. Das Getriebe der Behälterschwenkvorrichtung 19 ist mit 27 bezeichnet.

Der Deckel 30 des Behälters 8 ist in den Ausführungsbeispielen mehrteilig aufgebaut, wobei ein Deckelteil 28 um die Deckelachse DA kippbar gelagert ist. An dem der Deckelachse DA gegenüberliegenden Rand des Deckels 30 weist dieser ein Deckelteil 29 auf, welches wulstförmig gestaltet ist, um ein leichteres manuelles Anheben zu ermöglichen und einen dämpfenden Effekt bereitstellen zu können.

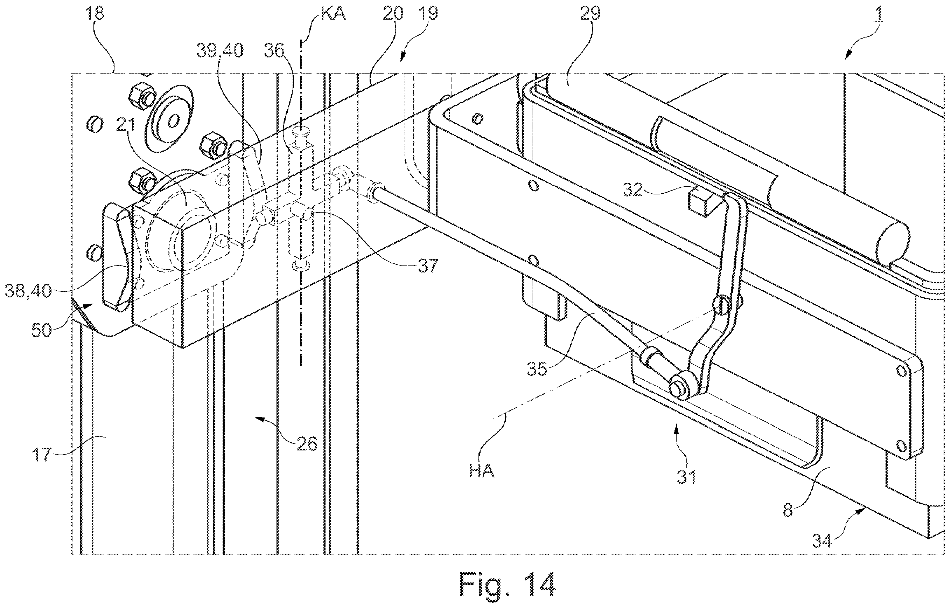

Bestandteile der Deckelverriegelung 31 gehen sowohl aus Figur 1 als auch aus Figur 14 hervor. Ein dem Deckel 30 zuzurechnender Zapfen 32 ist in der Anordnung nach Figur 1 sowie Figur 14 durch einen Hebel 33 der Deckelverriegelung 31 fixiert. Der zweiarmige Hebel 33 ist um eine Hebelachse HA schwenkbar, welche parallel zum Schwenkarm 20 angeordnet ist und zumindest näherungsweise die Schwenkachse SW schneidet. Durch die beiden Achsen SW und HA ist damit eine Ebene aufgespannt, welche parallel zum Behälterboden 34 angeordnet ist. An dem dem Zapfen 32 abgewandten Ende des Hebels 33 ist dieser mit einer Betätigungsstange 35 gekoppelt, welche ihrerseits mit einem Kippstern 36 gekoppelt ist. Die Kippachse des Kippsterns 36 ist mit KA bezeichnet und bei horizontaler Lage des Behälters 8 vertikal angeordnet. Die Kippachse KA schwenkt ebenso wie die Hebelachse HA mit dem Schwenkarm 20 mit. Eine den Kippstern 36 belastende Feder ist mit 37 bezeichnet. Der Kippstern 36 wirkt direkt mit einem Nockenbauteil 40 zusammen, welches zwei gleichartige Nocken 38, 39 umfasst. Die Nocken 38, 39 sind derart gestaltet, dass der Deckel 30 während des Schwenkens zwangsläufig verriegelt ist und lediglich in seiner Ausgangslage und in der um 180° gekippten Lage zu öffnen ist. Das Nockenbauteil 40 ist Teil der insgesamt mit 50 bezeichneten Nockensteuerung.

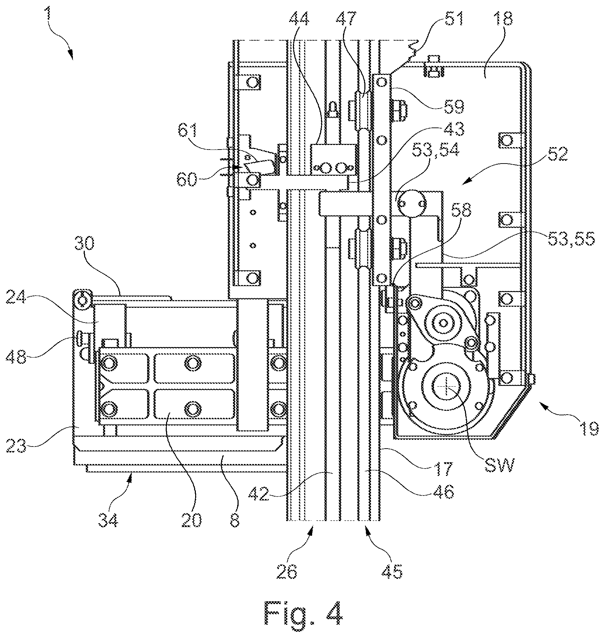

In der Rückansicht nach Figur 4 ist eine Hubspindel 42 angedeutet, die als Teil eines Gewindetriebs das Anheben und Absenken des Schlittens 18 ermöglicht. Ein mutterseitiges Bauteil 43 des Spindeltriebs ist mit dessen Spindelmutter gekoppelt. Auf dem mutterseitigen Bauteil 43, welches in der Ansicht nach Figur 4 eine Kreuzform hat, liegt ein Mitnehmer 44 auf, welcher fest mit dem Schlitten 18 verbunden ist. Zur linearen Führung der gesamten Behälterschwenkvorrichtung 19 ist eine Laufrollenführung 45 vorgesehen, welche eine Schiene 46 sowie Laufrollen 47 umfasst. Die Laufrollen 47 sind an Leisten 59, welche fest mit dem Schlitten 18 verbunden sind, angebracht.

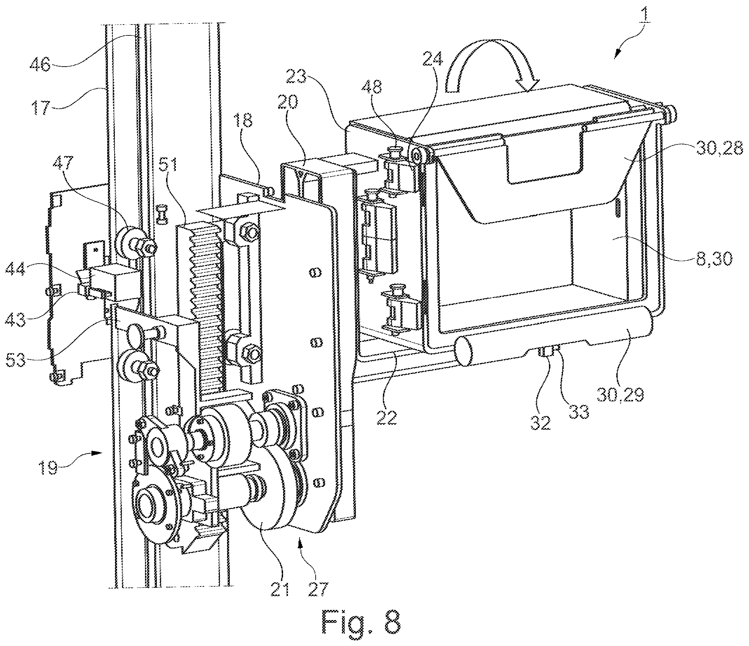

In den Figuren 4 und 8 ist eine Zahnstange 51 erkennbar, welche der Führungsbaugruppe 17 zuzurechnen ist. Die Zahnstange 51 ist eine Komponente des Getriebes 27 der Behälterschwenkvorrichtung 19. Sobald der Behälter 8 weit genug angehoben ist, greift ein Zahnrad in die Zahnstange 51 ein und leitet das Schwenken des Arms 20 ein. Gleichzeitig wird die Verfahrgeschwindigkeit des Schlittens 18 automatisch herabgesetzt. Zusätzlich zu dieser Funktion im Rahmen des Schwenkvorgangs hat die Zahnstange 51 eine Funktion als Komponente einer Sperr- und Freigabevorrichtung 52. Der Sperr- und Freigabevorrichtung 52 ist ein zweiarmiger Verriegelungshebel 53 zuzurechnen, dessen rechtwinklig zueinander angeordnete Arme mit 54, 55 bezeichnet sind. Der Verriegelungshebel 53 ist geringfügig in Richtung der Schwenkachse SW, das heißt bezogen auf die Anordnung nach Figur 4 senkrecht zur Bildebene, verlagerbar. Die Verlagerung wird erzwungen durch eine Steuerrolle 58, welche an die Zahnstange 51 anläuft.

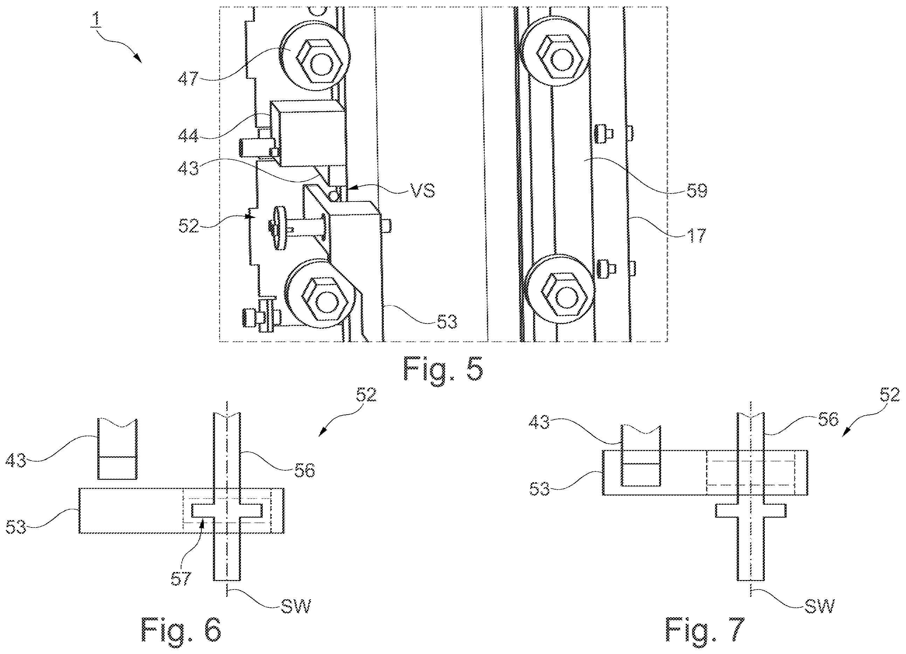

Befindet sich der Schlitten 18 außerhalb des Schwenkbereichs, was gleichbedeutend damit ist, dass die Steuerrolle 58 keinen Kontakt zur Zahnstange 51 hat, so ist der in Figur 5 erkennbare Zustand eingestellt. Hierbei ist zwischen dem Arm 54 und dem mutterseitigen Bauteil 43 ein Versatz VS in Richtung der Schwenkachse SW gegeben, der dafür sorgt, dass die Spindelmutter samt mutterseitigem Bauteil 43 nach unten vom Mitnehmer 44 wegfahren könnte, was auch als Überholen des Schlittens 18 bezeichnet wird. Der entsprechende Zustand ist symbolisiert in Figur 6 dargestellt. In diesem Zustand wirkt eine Welle 56, die fest mit dem Schwenkarm 20 verbunden ist, im Sinne einer aktivierten Verdrehsicherung 57 mit dem Verriegelungshebel 53 zusammen. Dies bedeutet, dass der Arm 20 nicht schwenkbar ist.

Wird dagegen, was innerhalb des Schwenkbereichs geschieht, der Verriegelungshebel 53 durch die an der Zahnstange 51 anlaufende Steuerrolle 58 verschoben, so ergibt sich der in Figur 7 skizzierte Zustand. Hierbei ist das mutterseitige Bauteil 43 durch den Verriegelungshebel 53 blockiert, während zugleich die Schwenkbewegung des Arms 20 freigegeben ist. Der Kipppunkt der Last, das heißt des Behälters 8, entsprechend einer vertikalen Ausrichtung des Schwenkarms 20, ist in der Anordnung nach Figur 8 erreicht. In diesem Zustand und beim weiteren Umkippen des Behälters 8 kann der Verriegelungshebel 53 auch der Drehmomentabstützung dienen.

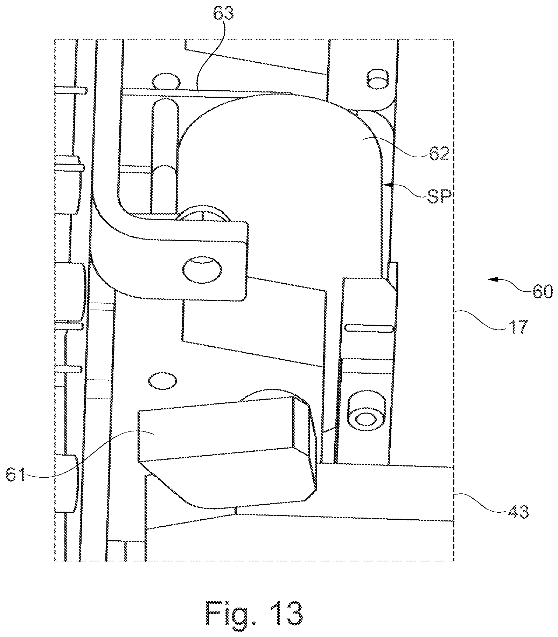

Details einer Bremse 60 der Behälterhebe- und Entleervorrichtung 1 nach Figur 1 gehen aus Figur 13 hervor. Ein Betätigungshebel 61 wirkt unmittelbar mit dem mutterseitigen Bauteil 43 zusammen. Entfernt sich das mutterseitige Bauteil 43 vom Betätigungshebel 61, so wird durch diesen eine Exzenterrolle 62 derart verdreht, dass sie einen Spalt SP schließt und in Anlage an die Führungsbaugruppe 17 gelangt. Eine Feder, welche die Bremse 60 vorspannt, ist mit 63 bezeichnet.

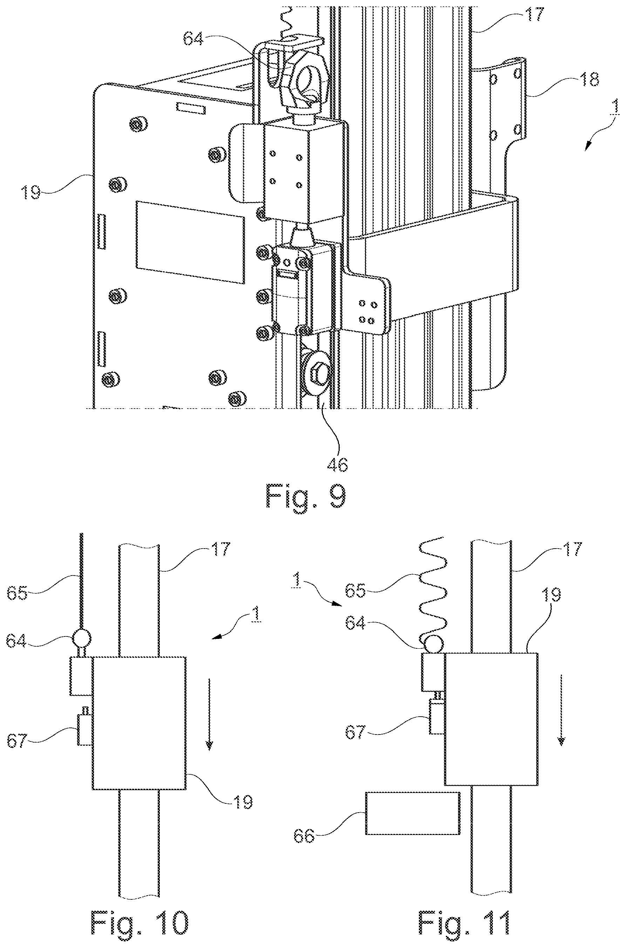

Im Ausführungsbeispiel nach den Figuren 9 bis 11 wird der Schlitten 18 nicht durch einen Spindeltrieb, sondern durch eine Kette 65, das heißt ein Zugmittel, angehoben und abgesenkt. In diesem Fall ist eine Schlaffkettenüberwachung gegeben. Fährt die Behälterschwenkvorrichtung 19 beim Absenken auf ein Hindernis 66 auf, sodass die Kette 65 an Spannung verliert, wie ein Vergleich der Figuren 10 und 11 in übertriebener Darstellung zeigt, so löst ein Schalter 67 aus, mittels dem der elektrische Antrieb der Kette 65 gestoppt wird. Auch die Kombination des Schalters 67 mit einer mechanischen Bremse ist möglich.

### Bezugszeichenliste

- 1: Behälterhebe- und Entleervorrichtung
- 2: Rahmen
- 3: Rad
- 4: Roller
- 5: Rad
- 6: Behälterstapel
- 7: Behälterstapel
- 8: Behälter
- 9: Behälterrand
- 10: Kontur des Behälters
- 11: Ausnehmung
- 12: höhenverstellbarer Behälteranschlag
- 13: Metallplatte
- 14: Tunnel
- 15: Fußbetätiger
- 16: Stütze
- 17: Führungsbaugruppe
- 18: Schlitten
- 19: Behälterschwenkvorrichtung
- 20: Schwenkarm
- 21: rotationssymmetrisches Bauteil
- 22: L-förmiges Verbindungselement
- 23: Halterahmen
- 24: Klinke
- 25: Klinke
- 26: Spindeltrieb
- 27: Getriebe der Schwenkvorrichtung
- 28: Deckelteil
- 29: Deckelteil
- 30: Deckel
- 31: Deckelverriegelung
- 32: Zapfen am Deckel
- 33: Hebel der Deckelverriegelung
- 34: Behälterboden
- 35: Betätigungsstange
- 36: Kippstern
- 37: Feder
- 38: Nockenbauteil
- 39: Nockenbauteil
- 40: Nockenbauteil
- 41: Fördervorrichtung
- 42: Hubspindel
- 43: mutterseitiges Bauteil
- 44: Mitnehmer
- 45: Laufrollenführung
- 46: Schiene
- 47: Laufrolle
- 48: Bolzen
- 49: Drehfeder
- 50: Nockensteuerung
- 51: Zahnstange
- 52: Sperr- und Freigabevorrichtung
- 53: Verriegelungshebel
- 54: Arm
- 55: Arm
- 56: Welle
- 57: Verdrehsicherungskontur
- 58: Steuerrolle
- 59: Leiste
- 60: Bremse
- 61: Betätigungshebel
- 62: Exzenterrolle
- 63: Feder
- 64: Öse
- 65: Kette
- 66: Hindernis
- 67: Schalter
- 68: seitlicher Anschlag

- DA: Deckelachse, Schwenkachse
- HA: Hebelachse
- KA: Kippachse
- K1: Kippachse
- K2: Kippachse
- S1...S7: Schritt
- SP: Spalt
- SW: Schwenkachse
- VS: Versatz

## Patentansprüche

1. Behälterhebe- und Entleervorrichtung, mit einem fahrbaren Rahmen (2), einem am Rahmen (2) in vertikaler Richtung verschiebbaren Schlitten (18), sowie einer am Schlitten (18) gelagerten Behälterschwenkvorrichtung (19), wobei die Behälterschwenkvorrichtung (19) dazu ausgebildet ist, einen Behälter (8), welcher sich auf einem Behälterstapel (6, 7) befindet, von oben mit Hilfe mehrerer Klinken (24, 25) zu greifen,
**dadurch gekennzeichnet, dass** die Behälterschwenkvorrichtung (19) eine Behälterdeckelverriegelung (31) umfasst, durch welche mechanisch zwangsgesteuert, nämlich mittels einer Nocken- oder Kulissensteuerung (50), in einer Lagerungsposition sowie in einer umgekippten Behälterposition ein Entriegelungszustand und im Übrigen, das heißt beim Schwenken, ein Verriegelungszustand eingestellt ist.

2. Hebe- und Entleervorrichtung nach Anspruch 1, **dadurch gekennzeichnet, dass** auf gegenüberliegenden Behälterseiten jeweils mindestens zwei Klinken (24, 25) angeordnet sind, welche zum selbsttätigen Einrasten in eine Kontur (10) eines Behälters (8) beim Absenken der Behälterschwenkvorrichtung (19) ausgebildet sind.

3. Hebe- und Entleervorrichtung nach Anspruch 1 oder 2, **dadurch gekennzeichnet, dass** Klinken (24, 25) für verschiedene Behältertypen vorhanden sind, wobei sämtliche Klinken (24, 25) durch Federkraft vorgespannt und mittels Rastbolzen (48) deaktivierbar sind.

4. Hebe- und Entleervorrichtung nach einem der Ansprüche 1 bis 3, **dadurch gekennzeichnet, dass** die Klinken (24, 25) im eingerasteten Zustand zur Zulassung eines Verschiebens des eingeklinkten Behälters (8) in einer zum Behälterboden (34) parallelen Ebene ausgebildet sind.

5. Hebe- und Entleervorrichtung nach einem der Ansprüche 1 bis 4, **gekennzeichnet durch** einen zum Antrieb des Schlittens (18) vorgesehenen Spindeltrieb (26).

6. Hebe- und Entleervorrichtung nach Anspruch 5, **gekennzeichnet durch** ein an der Behälterschwenkvorrichtung (19) verschiebbar gelagertes Verriegelungselement (53), welches in einer ersten Einstellung ein Überholen des Schlittens (18) durch ein Abtriebselement (43) des Spindeltriebs (26) freigibt und zugleich Schwenkbewegungen der Behälterschwenkvorrichtung (19) blockiert, wogegen in einer zweiten Einstellung ein Überholen des Schlittens (18) durch das Abtriebselement (43) des Spindeltriebs (26) blockiert ist und zugleich Schwenkbewegungen der Behälterschwenkvorrichtung (19) freigegeben sind, wobei eine Umschaltung zwischen den beiden Einstellungen des Verriegelungselementes (53) mechanisch zwangsgesteuert in Abhängigkeit von der Höhenlage des Schlittens (18) vorgesehen ist.

7. Hebe- und Entleervorrichtung nach Anspruch 5 oder 6, **gekennzeichnet durch** eine Bremse (60), welche zum mechanisch gesteuerten Stoppen des Schlittens (18) im Fall einer Entfernung des Abtriebselements (43) des Spindeltriebs (26) vom Schlitten (18) ausgebildet ist.

8. Hebe- und Entleervorrichtung nach einem der Ansprüche 1 bis 7, **dadurch gekennzeichnet, dass** der Schlitten (18) durch ein elektrisch betriebenes Zugmittel (65) angetrieben ist, wobei eine Vorrichtung zur Überwachung des Zugmittels (65) auf Spannung mit dem elektrischen Zugmittelantrieb gekoppelt ist.

9. Hebe- und Entleervorrichtung nach einem der Ansprüche 1 bis 8, **dadurch gekennzeichnet, dass** der fahrbare Rahmen (2) zum Umgreifen von zwei nebeneinander stehenden Behälterstapeln (6, 7) ausgebildet ist.

## Claims

1. A container lifting and emptying device having a movable frame (2), a slide (18) that can be moved on the frame (2) in a vertical direction, and a container pivoting device (19) that is mounted on the slide (18), wherein the container pivoting device (19) is designed to grip a container (8) located on a container stack (6, 7) from above by means of multiple latches (24, 25),
**characterised in that** the container pivoting device (19) comprises a container cover lock (31), by means of which, in a mechanically positively controlled manner, specifically by means of a cam or link control (50), an unlocking state is set in a storage position as well as in a tilted container position, and a locking state is set in other positions, i.e. during pivoting.

2. The container and lifting device according to claim 1, **characterised in that** at least two latches (24, 25) are arranged on opposite container sides in each case, said latches being designed for automatic engagement in a contour (10) of the container (8) upon lowering of the container pivoting device (19).

3. The container and lifting device according to claim 1 or 2, **characterised in that** latches (24, 25) are provided for different container types, wherein all of the latches (24, 25) are preloaded by spring force and can be deactivated by latching bolts (48).

4. The container and lifting device according to any one of claims 1 to 3, **characterised in that** the latches (24, 25) in an engaged state are designed to allow displacement of the container (8) held by the latches in a plane parallel to a container bottom (34).

5. The container and lifting device according to any one of claims 1 to 4, **characterised by** a spindle drive (26) for driving the slide (18).

6. The container and lifting device according to claim 5, **characterised by** a locking element (53) movably mounted on the container pivoting device (19), which, in a first setting, enables overtaking of the slide (18) by an output element (43) of the spindle drive (26) and at a same time blocks pivoting movements of the container pivoting device (19), whereas in a second setting, blocks overtaking of the slide (18) by the output element (43) of the spindle drive (26) and, at a same time, enables pivoting movements of the container pivoting device (19), wherein a switchover between the two settings of the locking element (53) is provided in a mechanically positively controlled manner as a function of the vertical position of the slide (18).

7. The container and lifting device according to claim 5 or 6, **characterised by** a brake (60) designed to stop the slide (18) in a mechanically controlled manner in the event of a removal of the output element (43) of the spindle drive (26) from the slide (18).

8. The container and lifting device according to any one of claims 1 to 7, **characterised in that** the slide (18) is driven by an electrically operated traction means (65), wherein a device for monitoring the traction means (65) for tension is coupled to the electrical traction drive.

9. The container and lifting device according to any one of claims 1 to 8, **characterised in that** the movable frame (2) is designed for gripping around two container stacks (6, 7) positioned next to one another.

## Revendications

1. Dispositif de levage et de vidage de récipient, comportant un châssis mobile (2), un chariot (18) déplaçable verticalement sur le châssis (2) et un dispositif de pivotement de récipient (19) monté sur le chariot (18), le dispositif de pivotement de récipient (19) étant conçu pour saisir par le haut, à l'aide d'une pluralité de cliquets (24, 25), un récipient (8) qui se trouve sur une pile de récipients (6, 7),
**caractérisé en ce que** le dispositif de pivotement de récipient (19) comprend un verrouillage de couvercle de récipient (31), au moyen duquel un état de déverrouillage est réglé de force par commande mécanique, à savoir au moyen d'une commande à came ou à coulisse (50), dans une position de stockage ainsi que dans une position de récipient renversée et, par ailleurs, c'est-à-dire lors du pivotement, un état de verrouillage.

2. Dispositif de levage et de vidage selon la revendication 1, **caractérisé en ce que,** sur des côtés opposés du récipient, sont agencés respectivement au moins deux cliquets (24, 25) qui sont conçus pour s'encliqueter automatiquement dans le contour (10) d'un récipient (8) lors de l'abaissement du dispositif de pivotement de récipient (19).

3. Dispositif de levage et de vidage selon la revendication 1 ou 2, **caractérisé en ce que** des cliquets (24, 25) sont présents pour différents types de récipients, tous les cliquets (24, 25) étant précontraints par la force d'un ressort et pouvant être désactivés au moyen de boulons d'encliquetage (48).

4. Dispositif de levage et de vidage selon l'une quelconque des revendications 1 à 3, **caractérisé en ce que** les cliquets (24, 25) sont conçus, à l'état encliqueté, pour permettre le déplacement du récipient (8) encliqueté dans un plan parallèle au fond de récipient (34).

5. Dispositif de levage et de vidage selon l'une quelconque des revendications 1 à 4, **caractérisé par** un vérin linéaire (26) servant à entraîner le chariot (18).

6. Dispositif de levage et de vidage selon la revendication 5, **caractérisé par** un élément de verrouillage (53) monté coulissant sur le dispositif de pivotement de récipient (19), qui, selon un premier réglage, libère un dépassement du chariot (18) au moyen d'un élément de sortie (43) du vérin linéaire (26) et bloque simultanément des mouvements de pivotement du dispositif de pivotement de récipient (19), tandis que selon un second réglage, un dépassement du chariot (18) est bloqué au moyen de l'élément de sortie (43) du vérin linéaire (26) et des mouvements de pivotement du dispositif de pivotement du récipient (19) sont libérés simultanément, la commande mécanique faisant passer, de force, l'élément de verrouillage (53) du premier réglage au second réglage en fonction de la position en hauteur du chariot (18).

7. Dispositif de levage et de vidage selon la revendication 5 ou 6, **caractérisé par** un frein (60), qui est conçu pour l'arrêt commandé mécaniquement du chariot (18) en cas d'éloignement de l'élément de sortie (43) du vérin linéaire (26) du chariot (18).

8. Dispositif de levage et de vidage selon l'une quelconque des revendications 1 à 7, **caractérisé en ce que** le chariot (18) est entraîné par un moyen de traction (65) électrique, un dispositif de contrôle de la tension du moyen de traction (65) étant couplé à l'entraînement électrique du moyen de traction.

9. Dispositif de levage et de vidage selon l'une quelconque des revendications 1 à 8, **caractérisé en ce que** le châssis mobile (2) est conçu pour saisir deux piles de récipients (6, 7) placées côte à côte.
